(19) Europäisches Patentamt
European Patent Office
Office européen des brevets

(11) **EP 3 163 780 A1**

(12) **EUROPEAN PATENT APPLICATION**
published in accordance with Art. 153(4) EPC

(43) Date of publication:
**03.05.2017 Bulletin 2017/18**

(51) Int Cl.:
**H04L 1/00** (2006.01)

(21) Application number: **14898865.2**

(22) Date of filing: **29.07.2014**

(86) International application number:
**PCT/CN2014/083222**

(87) International publication number:
**WO 2016/015222 (04.02.2016 Gazette 2016/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.
Longgang District
Shenzhen, Guangdong 518129 (CN)**

(72) Inventors:
• **ZHANG, Lixue
Shenzhen
Guangdong 518129 (CN)**
• **LU, Zhenwei
Shenzhen
Guangdong 518129 (CN)**

(74) Representative: **Körber, Martin Hans
Mitscherlich PartmbB
Patent- und Rechtsanwälte
Sonnenstrasse 33
80331 München (DE)**

(54) **DATA ENCRYPTION AND TRANSMISSION METHOD AND DEVICE**

(57) Embodiments of the present invention provide a data encryption and transmission method and apparatus. The data encryption and transmission apparatus includes: a processing module, configured to evenly partition original data into N first data packets, where N is a positive integer; encrypt at least one first data packet in the N first data packets to obtain N encrypted first data packets; and encode, by using fountain code, the N encrypted first data packets to obtain M second data packets, where M is a positive integer, and M>N; and a sending module, configured to send the M second data packets obtained by the processing module to a receive end. The data encryption and transmission method and apparatus are provided in the embodiments of the present invention to improve security of encoding to-be-transmitted data by using the fountain code.

| Processing module | ~11 | | Sending module | ~12 |

FIG. 1

EP 3 163 780 A1

**Description**

**TECHNICAL FIELD**

Embodiments of the present invention relate to the field of wireless communications technologies, and in particular, to a data encryption and transmission method and apparatus.

**BACKGROUND**

Fountain code (Fountain Code) is a new channel coding technology, and is mainly applied to services such as a large-scale data transmission service and a reliable broadcast/multicast service. A basic principle of the fountain code is: original data is evenly partitioned into n data packets at a transmit end, and the n data packets are encoded to obtain m encoded data packets, where both m and n are positive integers, and m>n; and as long as a receive end receives any n encoded data packets, all original data can be successfully restored by using a decoding algorithm.

The fountain code is mainly applied to point-to-multipoint communication. For example, multiple users simultaneously monitor a broadcast channel, and because locations in which the users lose data packets may be different, requirements of all the users cannot be met by means of retransmission. However, by using a fountain code technology, the original data can be restored as long as a quantity of encoded data packets received by the user reaches a specific threshold, which is irrelevant to the location in which the user loses the data packet. In addition, the fountain code may also be applied to point-to-point unicast communication, and can reduce system feedback complexity and improve a network transmission throughput.

However, because the original data can be restored as long as a sufficient quantity of encoded data packets are received, and the fountain code is mainly applied to a broadcast/multicast service, when data is encoded by using the fountain code and then transmitted, how to ensure data security is an urgent problem to be resolved at present.

**SUMMARY**

Embodiments of the present invention provide a data encryption and transmission method and apparatus to improve security of encoding to-be-transmitted data by using fountain code.

A first aspect provides a data encryption and transmission apparatus, including:

a processing module, configured to evenly partition original data into N first data packets, where N is a positive integer; encrypt at least one first data packet in the N first data packets to obtain N encrypted first data packets; and encode, by using fountain code, the N encrypted first data packets to obtain M second data packets, where M is a positive integer, and M>N; and

a sending module, configured to send the M second data packets obtained by the processing module to a receive end.

With reference to the first aspect, in a first possible implementation manner of the first aspect, the processing module is specifically configured to encrypt the at least one first data packet in the N first data packets, and add, to a header of each of the first data packets, indication information indicating whether the first data packet is encrypted, to obtain the N encrypted first data packets.

With reference to the first aspect or the first possible implementation manner of the first aspect, in a second possible implementation manner of the first aspect, the sending module is further configured to send encryption notification information to the receive end before sending the M second data packets obtained by the processing module to the receive end, where the encryption notification information includes indication information indicating that the original data is first encrypted and then encoded by using the fountain code.

With reference to the first aspect, in a third possible implementation manner of the first aspect, the sending module is further configured to send encryption notification information to the receive end before sending the M second data packets obtained by the processing module to the receive end, where the encryption notification information includes indication information indicating that the original data is first encrypted and then encoded by using the fountain code, and indication information indicating whether each of the first data packets is encrypted.

With reference to the second or the third possible implementation manner of the first aspect, in a fourth possible implementation manner of the first aspect, the sending module is specifically configured to send the decryption notification information to the receive end by using an RRC configuration message.

With reference to any one of the first aspect, or the first to the fourth possible implementation manners of the first aspect, in a fifth possible implementation manner of the first aspect, if a size of to-be-transmitted data is less than a data packet size preset by the data encryption and transmission apparatus, the processing module is further configured to successively combine, before evenly partitioning the original data into the N first data packets, at least two pieces of to-be-transmitted data to generate combined to-be-transmitted data, where the combined to-be-transmitted data is greater than or equal to the data packet size preset by the data encryption and transmission apparatus; where if the combined to-be-transmitted data is greater than the data packet size preset by the data encryption and transmission apparatus, a last piece of to-be-transmitted data is partitioned, so that remaining combined to-be-transmitted data is equal to the data packet size preset by the data encryption and transmission apparatus, and the remaining combined to-be-transmitted data is used as the original data; and if the combined to-be-transmitted data is equal to the data packet size preset by the data encryption and transmission apparatus, the combined to-be-transmitted data is used as the original data.

With reference to any one of the first aspect, or the first to the fourth possible implementation manners of the first aspect, in a sixth possible implementation manner of the first aspect, if a size of to-be-transmitted data is greater than a data packet size preset by the data encryption and transmission apparatus, the processing module is further configured to obtain the original data from the to-be-transmitted data by means of partition before evenly partitioning the original data into the N first data packets, where a size of the original data is equal to the data packet size preset by the data encryption and transmission apparatus.

With reference to any one of the first aspect, or the first to the sixth possible implementation manners of the first aspect, in a seventh possible implementation manner of the first aspect, the original data is PDCP layer data.

A second aspect provides a data encryption and transmission apparatus, including:

a receiving module, configured to receive N second data packets from a transmit end, where the second data packets are encoded by using fountain code, and N is a positive integer; and
a processing module, configured to decode, by using fountain code, the N second data packets received by the receiving module, to obtain N first data packets; decrypt at least one first data packet in the N first data packets to obtain N decrypted first data packets; and combine the N decrypted first data packets into original data.

With reference to the second aspect, in a first possible implementation manner of the second aspect, the processing module is specifically configured to obtain, from a header of each of the first data packets, indication information indicating whether the first data packet is encrypted; and decrypt a first data packet whose indication information indicates that the first data packet is encrypted, to obtain the N decrypted first data packets.

With reference to the second aspect or the first possible implementation manner of the second aspect, in a second possible implementation manner of the second aspect, the receiving module is further configured to: before receiving the N second data packets from the transmit end, receive encryption notification information sent by the transmit end, where the encryption notification information includes indication information indicating that the original data is first encrypted and then encoded by using the fountain code.

With reference to the second aspect, in a third possible implementation manner of the second aspect, the receiving module is further configured to: before receiving the N second data packets from the transmit end, receive encryption notification information sent by the transmit end, where the encryption notification information includes indication information indicating that the original data is first encrypted and then encoded by using the fountain code, and indication information indicating whether each of the first data packets is encrypted; and
the processing module is specifically configured to decrypt, according to the indication information indicating whether each of the first data packets is encrypted, the at least one first data packet in the N first data packets to obtain the N decrypted first data packets.

With reference to the second or the third possible implementation manner of the second aspect, in a fourth possible implementation manner of the second aspect, the receiving module is specifically configured to receive the decryption notification information sent by the transmit end by using an RRC configuration message.

With reference to any one of the second aspect, or the first to the fourth possible implementation manners of the second aspect, in a fifth possible implementation manner of the second aspect, if a size of to-be-transmitted data is less than a data packet size preset by the data encryption and transmission apparatus, the processing module is further configured to partition the original data into at least two pieces of to-be-transmitted data after combining the N decrypted first data packets into the original data.

With reference to any one of the second aspect, or the first to the fourth possible implementation manners of the second aspect, in a sixth possible implementation manner of the second aspect, if a size of to-be-transmitted data is greater than a data packet size preset by the data encryption and transmission apparatus, the processing module is further configured to combine the original data received at least twice into the to-be-transmitted data after combining the N decrypted first data packets into the original data.

With reference to any one of the second aspect, or the first to the sixth possible implementation manners of the second aspect, in a seventh possible implementation manner of the second aspect, the original data is PDCP layer data.

A third aspect provides a data encryption and transmission apparatus, including:

a processing module, configured to evenly partition original data into N first data packets, where N is a positive integer; encode, by using fountain code, the N first data packets to obtain M second data packets, where M is a positive integer, and M>N; and encrypt at least M-N+1 second data packets in the M second data packets to obtain M encrypted second data packets; and

a sending module, configured to send the M encrypted second data packets obtained by the processing module to a receive end.

With reference to the third aspect, in a first possible implementation manner of the third aspect, the processing module is specifically configured to encrypt the at least M-N+1 second data packets in the M second data packets, and add, to a header of each of the second data packets, indication information indicating whether the second data packet is encrypted, to obtain the M encrypted second data packets.

With reference to the third aspect or the first possible implementation manner of the third aspect, in a second possible implementation manner of the third aspect, the sending module is further configured to send encryption notification information to the receive end before sending the M encrypted second data packets obtained by the processing module to the receive end, where the encryption notification information includes indication information indicating that the original data is first encoded by using the fountain code and then encrypted.

With reference to the second possible implementation manner of the third aspect, in a third possible implementation manner of the third aspect, the sending encryption notification information to the receive end includes:

sending the decryption notification information to the receive end by using an RRC configuration message.

With reference to any one of the third aspect, or the first to the third possible implementation manners of the third aspect, in a fourth possible implementation manner of the third aspect, if a size of to-be-transmitted data is less than a data packet size preset by the data encryption and transmission apparatus, the processing module is further configured to successively combine, before evenly partitioning the original data into the N first data packets, at least two pieces of to-be-transmitted data to generate combined to-be-transmitted data, where the combined to-be-transmitted data is greater than or equal to the data packet size preset by the data encryption and transmission apparatus; where if the combined to-be-transmitted data is greater than the data packet size preset by the data encryption and transmission apparatus, a last piece of to-be-transmitted data is partitioned, so that remaining combined to-be-transmitted data is equal to the data packet size preset by the data encryption and transmission apparatus, and the remaining combined to-be-transmitted data is used as the original data; and if the combined to-be-transmitted data is equal to the data packet size preset by the data encryption and transmission apparatus, the combined to-be-transmitted data is used as the original data.

With reference to any one of the third aspect, or the first to the third possible implementation manners of the third aspect, in a fifth possible implementation manner of the third aspect, if a size of to-be-transmitted data is greater than a data packet size preset by the data encryption and transmission apparatus, the processing module is further configured to obtain the original data from the to-be-transmitted data by means of partition before evenly partitioning the original data into the N first data packets, where a size of the original data is equal to the data packet size preset by the data encryption and transmission apparatus.

With reference to any one of the third aspect, or the first to the fifth possible implementation manners of the third aspect, in a sixth possible implementation manner of the third aspect, the original data is PDCP layer data.

A fourth aspect provides a data encryption and transmission apparatus, including:

a receiving module, configured to receive N encrypted second data packets from a transmit end, where the encrypted second data packets are encoded by using fountain code, and N is a positive integer; and

a processing module, configured to decrypt at least one encrypted second data packet in the N encrypted second data packets received by the receiving module, to obtain N second data packets; decode, by using fountain code, the N second data packets to obtain N first data packets; and combine the N first data packets into original data.

With reference to the fourth aspect, in a first possible implementation manner of the fourth aspect, the processing module is specifically configured to obtain, from a header of each of the encrypted second data packets, indication information indicating whether the second data packet is encrypted; and decrypt an encrypted second data packet whose indication information indicates that the second data packet is encrypted, to obtain the N second data packets.

With reference to the fourth aspect or the first possible implementation manner of the fourth aspect, in a second possible implementation manner of the fourth aspect, the receiving module is further configured to: before receiving the N encrypted second data packets from the transmit end, receive encryption notification information sent by the transmit end, where the encryption notification information includes indication information indicating that the original data is first encoded by using the fountain code and then encrypted.

With reference to the second possible implementation manner of the fourth aspect, in a third possible implementation manner of the fourth aspect, the receiving module is specifically configured to receive the decryption notification information sent by the transmit end by using an RRC configuration message.

With reference to any one of the fourth aspect, or the first to the third possible implementation manners of the fourth aspect, in a fourth possible implementation manner of the fourth aspect, if a size of to-be-transmitted data is less than a data packet size preset by the data encryption and transmission apparatus, the processing module is further configured to partition the original data into at least two pieces of to-be-transmitted data after combining the N first data packets into the original data.

With reference to any one of the fourth aspect, or the first to the third possible implementation manners of the fourth aspect, in a fifth possible implementation manner of the fourth aspect, if a size of to-be-transmitted data is greater than a data packet size preset by the data encryption and transmission apparatus, the processing module is further configured to combine the original data received at least twice into the to-be-transmitted data after combining the N first data packets into the original data.

With reference to any one of the fourth aspect, or the first to the fifth possible implementation manners of the fourth aspect, in a sixth possible implementation manner of the fourth aspect, the original data is PDCP layer data.

A fifth aspect provides a data encryption and transmission method, including:

evenly partitioning original data into N first data packets, where N is a positive integer;
encrypting at least one first data packet in the N first data packets to obtain N encrypted first data packets;
encoding, by using fountain code, the N encrypted first data packets to obtain M second data packets, where M is a positive integer, and M>N; and
sending the M second data packets to a receive end.

With reference to the fifth aspect, in a first possible implementation manner of the fifth aspect, the encrypting at least one first data packet in the N first data packets to obtain N encrypted first data packets includes:

encrypting the at least one first data packet in the N first data packets, and adding, to a header of each of the first data packets, indication information indicating whether the first data packet is encrypted, to obtain the N encrypted first data packets.

With reference to the fifth aspect or the first possible implementation manner of the fifth aspect, in a second possible implementation manner of the fifth aspect, before the sending the M second data packets to a receive end, the method further includes:

sending encryption notification information to the receive end, where the encryption notification information includes indication information indicating that the original data is first encrypted and then encoded by using the fountain code.

With reference to the fifth aspect, in a third possible implementation manner of the fifth aspect, before the sending the M second data packets to a receive end, the method further includes:

sending encryption notification information to the receive end, where the encryption notification information includes indication information indicating that the original data is first encrypted and then encoded by using the fountain code, and indication information indicating whether each of the first data packets is encrypted.

With reference to the second or the third possible implementation manner of the fifth aspect, in a fourth possible implementation manner of the fifth aspect, the sending encryption notification information to the receive end includes:

sending the decryption notification information to the receive end by using an RRC configuration message.

With reference to any one of the fifth aspect, or the first to the fourth possible implementation manners of the fifth aspect, in a fifth possible implementation manner of the fifth aspect, if a size of to-be-transmitted data is less than a data packet size preset in the data encryption and transmission method, before the evenly partitioning original data into N first data packets, the method further includes:

successively combining at least two pieces of to-be-transmitted data to generate combined to-be-transmitted data, where the combined to-be-transmitted data is greater than or equal to the data packet size preset in the data encryption and transmission method; and
if the combined to-be-transmitted data is greater than the data packet size preset in the data encryption and transmission method, partitioning a last piece of to-be-transmitted data, so that remaining combined to-be-transmitted data is equal to the data packet size preset in the data encryption and transmission method, and using the remaining combined to-be-transmitted data as the original data; or if the combined to-be-transmitted data is equal to the data packet size preset in the data encryption and transmission method, using the combined to-be-transmitted data as the original data.

With reference to any one of the fifth aspect, or the first to the fourth possible implementation manners of the fifth aspect, in a sixth possible implementation manner of the fifth aspect, if a size of to-be-transmitted data is greater than a data packet size preset in the data encryption and transmission method, before the evenly partitioning original data into N first data packets, the method further includes:

obtaining the original data from the to-be-transmitted data by means of partition, where a size of the original data is equal to the data packet size preset in the data encryption and transmission method.

With reference to any one of the fifth aspect, or the first to the sixth possible implementation manners of the fifth aspect, in a seventh possible implementation manner of the fifth aspect, the original data is PDCP layer data.

A sixth aspect provides a data encryption and transmission method, including:

receiving N second data packets from a transmit end, where the second data packets are encoded by using fountain code, and N is a positive integer;
decoding, by using fountain code, the N second data packets to obtain N first data packets;
decrypting at least one first data packet in the N first data packets to obtain N decrypted first data packets; and
combining the N decrypted first data packets into original data.

With reference to the sixth aspect, in a first possible implementation manner of the sixth aspect, the decrypting at least one first data packet in the N first data packets to obtain N decrypted first data packets includes:

obtaining, from a header of each of the first data packets, indication information indicating whether the first data packet is encrypted; and
decrypting a first data packet whose indication information indicates that the first data packet is encrypted, to obtain the N decrypted first data packets.

With reference to the sixth aspect or the first possible implementation manner of the sixth aspect, in a second possible implementation manner of the sixth aspect, before the receiving N second data packets from a transmit end, the method further includes:

receiving encryption notification information sent by the transmit end, where the encryption notification information includes indication information indicating that the original data is first encrypted and then encoded by using the fountain code.

With reference to the sixth aspect, in a third possible implementation manner of the sixth aspect, before the receiving N second data packets from a transmit end, the method further includes:

receiving encryption notification information sent by the transmit end, where the encryption notification information includes indication information indicating that the original data is first encrypted and then encoded by using the fountain code, and indication information indicating whether each of the first data packets is encrypted; and
the decrypting at least one first data packet in the N first data packets to obtain N decrypted first data packets includes:

decrypting, according to the indication information indicating whether each of the first data packets is encrypted, the at least one first data packet in the N first data packets to obtain the N decrypted first data packets.

With reference to the second or the third possible implementation manner of the sixth aspect, in a fourth possible implementation manner of the sixth aspect, the receiving encryption notification information sent by the transmit end includes:

receiving the decryption notification information sent by the transmit end by using an RRC configuration message.

With reference to any one of the sixth aspect, or the first to the fourth possible implementation manners of the sixth aspect, in a fifth possible implementation manner of the sixth aspect, if a size of to-be-transmitted data is less than a data packet size preset in the data encryption and transmission method, after the combining the N decrypted first data packets into original data, the method further includes:

partitioning the original data into at least two pieces of to-be-transmitted data.

With reference to any one of the sixth aspect, or the first to the fourth possible implementation manners of the sixth aspect, in a sixth possible implementation manner of the sixth aspect, if a size of to-be-transmitted data is greater than a data packet size preset in the data encryption and transmission method, after the combining the N decrypted first data packets into original data, the method further includes:

combining the original data received at least twice into the to-be-transmitted data.

With reference to any one of the sixth aspect, or the first to the sixth possible implementation manners of the sixth aspect, in a seventh possible implementation manner of the sixth aspect, the original data is PDCP layer data.

A seventh aspect provides a data encryption and transmission method, including:

evenly partitioning original data into N first data packets, where N is a positive integer;
encoding, by using fountain code, the N first data packets to obtain M second data packets, where M is a positive integer, and M>N;
encrypting at least M-N+1 second data packets in the M second data packets to obtain M encrypted second data packets; and
sending the M encrypted second data packets to a receive end.

With reference to the seventh aspect, in a first possible implementation manner of the seventh aspect, the encrypting at least M-N+1 second data packets in the M second data packets to obtain M encrypted second data packets includes:

encrypting the at least M-N+1 second data packets in the M second data packets, and adding, to a header of each of the second data packets, indication information indicating whether the second data packet is encrypted, to obtain the M encrypted second data packets.

With reference to the seventh aspect or the first possible implementation manner of the seventh aspect, in a second possible implementation manner of the seventh aspect, before the sending the M encrypted second data packets to a receive end, the method further includes:

sending encryption notification information to the receive end, where the encryption notification information includes indication information indicating that the original data is first encoded by using the fountain code and then encrypted.

With reference to the second possible implementation manner of the seventh aspect, in a third possible implementation manner of the seventh aspect, the sending encryption notification information to the receive end includes:

sending the decryption notification information to the receive end by using an RRC configuration message.

With reference to any one of the seventh aspect, or the first to the third possible implementation manners of the seventh aspect, in a fourth possible implementation manner of the seventh aspect, if a size of to-be-transmitted data is less than a data packet size preset in the data encryption and transmission method, before the evenly partitioning original data into N first data packets, the method further includes:

successively combining at least two pieces of to-be-transmitted data to generate combined to-be-transmitted data, where the combined to-be-transmitted data is greater than or equal to the data packet size preset in the data encryption and transmission method; and
if the combined to-be-transmitted data is greater than the data packet size preset in the data encryption and transmission method, partitioning a last piece of to-be-transmitted data, so that remaining combined to-be-transmitted data is equal to the data packet size preset in the data encryption and transmission method, and using the remaining combined to-be-transmitted data as the original data; or if the combined to-be-transmitted data is equal to the data packet size preset in the data encryption and transmission method, using the combined to-be-transmitted data as the original data.

With reference to any one of the seventh aspect, or the first to the third possible implementation manners of the seventh aspect, in a fifth possible implementation manner of the seventh aspect, if a size of to-be-transmitted data is greater than a data packet size preset in the data encryption and transmission method, before the evenly partitioning original data into N first data packets, the method further includes:

obtaining the original data from the to-be-transmitted data by means of partition, where a size of the original data is equal to the data packet size preset in the data encryption and transmission method.

With reference to any one of the seventh aspect, or the first to the fifth possible implementation manners of the seventh aspect, in a sixth possible implementation manner of the seventh aspect, the original data is PDCP layer data.

An eighth aspect provides a data encryption and transmission method, including:

receiving N encrypted second data packets from a transmit end, where the encrypted second data packets are encoded by using fountain code, and N is a positive integer;

decrypting at least one encrypted second data packet in the N encrypted second data packets to obtain N second data packets;

decoding, by using fountain code, the N second data packets to obtain N first data packets; and

combining the N first data packets into original data.

With reference to the eighth aspect, in a first possible implementation manner of the eighth aspect, the decrypting at least one second data packet in the N encrypted second data packets to obtain N second data packets includes:

obtaining, from a header of each of the encrypted second data packets, indication information indicating whether the second data packet is encrypted; and

decrypting an encrypted second data packet whose indication information indicates that the second data packet is encrypted, to obtain the N second data packets.

With reference to the eighth aspect or the first possible implementation manner of the eighth aspect, in a second possible implementation manner of the eighth aspect, before the receiving N encrypted second data packets from a transmit end, the method further includes:

receiving encryption notification information sent by the transmit end, where the encryption notification information includes indication information indicating that the original data is first encoded by using the fountain code and then encrypted.

With reference to the second possible implementation manner of the eighth aspect, in a third possible implementation manner of the eighth aspect, the receiving encryption notification information sent by the transmit end includes:

receiving the decryption notification information sent by the transmit end by using an RRC configuration message.

With reference to any one of the eighth aspect, or the first to the third possible implementation manners of the eighth aspect, in a fourth possible implementation manner of the eighth aspect, if a size of to-be-transmitted data is less than a data packet size preset in the data encryption and transmission method, after the combining the N first data packets into original data, the method further includes:

partitioning the original data into at least two pieces of to-be-transmitted data.

With reference to any one of the eighth aspect, or the first to the third possible implementation manners of the eighth aspect, in a fifth possible implementation manner of the eighth aspect, if a size of to-be-transmitted data is greater than a data packet size preset in the data encryption and transmission method, after the combining the N first data packets into original data, the method further includes:

combining the original data received at least twice into the to-be-transmitted data.

With reference to any one of the eighth aspect, or the first to the fifth possible implementation manners of the eighth aspect, in a sixth possible implementation manner of the eighth aspect, the original data is PDCP layer data.

According to the data encryption and transmission method and apparatus provided in the embodiments of the present invention, after original data is evenly partitioned into N first data packets, first, at least one first data packet is encrypted by using an encryption algorithm, then N encrypted first data packets are encoded into M second data packets by using fountain code, and the M second data packets are sent to a receive end, so that security of encoding to-be-transmitted data by using the fountain code is improved.

**BRIEF DESCRIPTION OF DRAWINGS**

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG 1 is a schematic structural diagram of Embodiment 1 of a data encryption and transmission apparatus according to the embodiments of the present invention;

FIG 2 is a schematic structural diagram of Embodiment 2 of a data encryption and transmission apparatus according to the embodiments of the present invention;

FIG 3 is a schematic structural diagram of Embodiment 3 of a data encryption and transmission apparatus according to the embodiments of the present invention;

FIG 4 is a schematic structural diagram of Embodiment 4 of a data encryption and transmission apparatus according to the embodiments of the present invention;

FIG 5 is a flowchart of Embodiment 1 of a data encryption and transmission method according to the embodiments of the present invention;

FIG. 6 is a flowchart of Embodiment 2 of a data encryption and transmission method according to the embodiments of the present invention;

FIG. 7 is a flowchart of Embodiment 3 of a data encryption and transmission method according to the embodiments of the present invention; and

FIG. 8 is a flowchart of Embodiment 4 of a data encryption and transmission method according to the embodiments of the present invention.

**DESCRIPTION OF EMBODIMENTS**

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

A specific method for encoding data by using fountain code is shown in formula (1):

$$
\begin{bmatrix} y_1 \\ y_2 \\ y_3 \\ \vdots \\ y_m \end{bmatrix} = \begin{bmatrix} a_{11} & a_{12} & a_{13} & \cdots & a_{1n} \\ a_{21} & a_{22} & a_{23} & \cdots & a_{2n} \\ a_{21} & a_{32} & a_{22} & \cdots & a_{3n} \\ \vdots & \vdots & \vdots & \ddots & \vdots \\ a_{m1} & a_{m2} & a_{m3} & \cdots & a_{mn} \end{bmatrix} \bullet \begin{bmatrix} x_1 \\ x_2 \\ x_3 \\ \vdots \\ x_n \end{bmatrix} \qquad (1);
$$

where

$x_1$, $x_2$, ..., $x_n$ are input vectors, and each data packet in n data packets obtained by evenly partitioning original data corresponds to one input vector; $y_1$, $y_2$, ..., $y_n$ are output vectors, and each data packet in m encoded data packets obtained after encoding by using the fountain code corresponds to one output vector; and $a_{11}$, ..., $a_{mn}$ are encoding vectors, an mxn matrix formed by all encoding vectors is an encoding matrix, and m>n. A transmit end encodes the n data packets obtained by means of partition into the m encoded data packets by using the encoding matrix, and sends the m encoded data packets to a receive end. After receiving the n encoded data packets, the receive end can restore the original data by using a decoding matrix.

A fountain code technology may be applied to multiple networks, and may be used to perform encoding process-

**EP 3 163 780 A1**

ing on data at different data layers. For example, in a Long Term Evolution (Long Term Evolution, LTE) network, the fountain code technology can be used at a Packet Data Convergence Protocol (Packet Data Convergence Protocol, PDCP) layer, a Media Access Control (Media Access Control, MAC) layer, and a Radio Link Control (Radio Link Control, RLC) layer. When the fountain code technology is applied to unreliable data transmission, in view of data security, data encoded by using the fountain code needs to be encrypted. For example, the data is PDCP layer data in the LTE network.

However, at present, a method for encrypting the PDCP layer data is encrypting all sent data packets. If the PDCP layer data is encoded by using the fountain code, a quantity of encoded data packets is relatively large. If all the data packets are encrypted, encryption and decryption processes are relatively complex, and a computation amount is relatively large, and a large quantity of system resources need to be occupied in the encryption and decryption processes.

The embodiments of the present invention provide a data encryption and transmission method and apparatus, and an encoding feature of the fountain code is combined with a method for encrypting data, so as to reduce a computation amount during data encryption and decryption, and save system resources. The data encryption and transmission method and apparatus provided in the embodiments may be applied to any communications system, provided that the communications system uses the fountain code to encode data and has a requirement for data security.

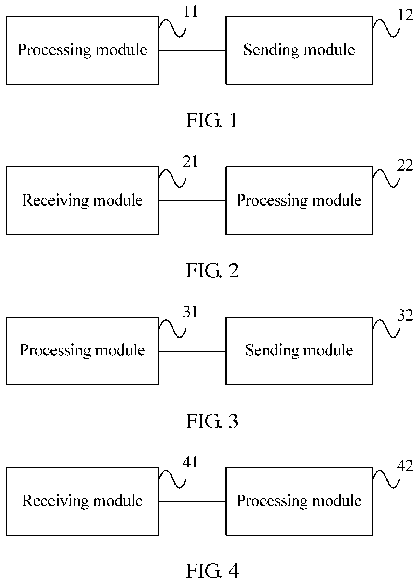

FIG. 1 is a schematic structural diagram of Embodiment 1 of a data encryption and transmission apparatus according to the embodiments of the present invention. As shown in FIG. 1, the data encryption and transmission apparatus in this embodiment includes: a processing module 11 and a sending module 12.

The processing module 11 is configured to evenly partition original data into N first data packets, where N is a positive integer; encrypt at least one first data packet in the N first data packets to obtain N encrypted first data packets; and encode, by using fountain code, the N encrypted first data packets to obtain M second data packets, where M is a positive integer, and M>N.

Specifically, the data encryption and transmission apparatus provided in this embodiment is located at a data transmit end, and is configured to encode data by using the fountain code, encrypt the data, and then send the data to a data receive end.

Because the data needs to be encoded by using the fountain code, it can be learned according to an encoding principle of the fountain code that the original data first needs to be partitioned into several pieces. Therefore, the data encryption and transmission apparatus provided in this embodiment includes the processing module 11, which is configured to evenly partition the original data into the N first data packets, where N is a positive integer. The original data herein is data that needs to be sent by the transmit end to a receive end. A size of the original data is configured according to a system capability. The quantity N of first data packets and a size of a first data packet are configured according to a requirement of an encoding algorithm of the fountain code. Generally, a larger N, that is, a smaller size of a first data packet, indicates better performance of restoring data by the receive end, but more system resources needed during encoding and decoding; and vice versa.

After obtaining the N first data packets by means of partition, the processing module 11 may select the at least one first data packet in the N first data packets for encryption, to obtain the N encrypted first data packets. An encryption algorithm used for the at least one first data packet in the N first data packets may be any encryption algorithm. The processing module 11 may select, according to a preset encryption method, at least one first data packet for encryption, or may randomly select a first data packet for encryption.

For example, an encryption method preset in the data encryption and transmission apparatus is: encrypting a first data packet whose number is odd in the N first data packets. In this case, the processing module 11 may encrypt, according to the preset encryption method, the first data packet whose number is odd.

If the processing module 11 randomly selects a first data packet for encryption, after encrypting the at least one first data packet, the processing module 11 needs to add, to a header of the encrypted first data packet, indication information indicating whether the first data packet is encrypted.

After encrypting the at least one first data packet in the N first data packets, the processing module 11 may encode, by using the fountain code, the N encrypted first data packets to obtain the M second data packets. It can be learned according to a fountain code principle that M is a positive integer, and M>N. A coding matrix used by the processing module 11 to encode the N encrypted first data packets by using the fountain code may be determined according to the system capability or a preset encoding algorithm. It can be learned according to the formula (1) that because at least one of the N encrypted first data packets is encrypted, all the M second data packets undergo encryption processing.

The sending module 12 is configured to send the M second data packets obtained by the processing module 11 to a receive end.

Specifically, the data encryption and transmission apparatus provided in this embodiment further includes the sending module 12, which is configured to send the M second data packets to the receive end.

Because the processing module 11 encrypts the at least one of the N first data packets before encoding the data by using the fountain code, it can be learned according to the formula (1) that all the M second data packets are encrypted after the processing module 11 encodes the N encoded first data packets by using the fountain code. In this

10

way, even when an illegal or an unlicensed device receives N second data packets, the device cannot obtain the original data sent by the transmit end without a corresponding decryption algorithm.

Preferably, the processing module 11 may encrypt a maximum of N-1 first data packets, that is, the processing module 11 does not encrypt all the first data packets. In this way, not only an objective of performing data encryption and transmission can be achieved, but also an encryption computation amount is reduced, thereby saving system resources.

Further, in this embodiment, because the data is first encrypted and then encoded by using the fountain code, to ensure that the receive end can properly decode and decrypt the data, the sending module 12 further sends encryption notification information to the receive end before sending the M second data packets to the receive end. The encryption notification information includes indication information indicating that the original data is first encrypted and then encoded by using the fountain code.

In this embodiment, after original data is evenly partitioned into N first data packets, first, at least one first data packet is encrypted by using an encryption algorithm, then N encrypted first data packets are encoded into M second data packets by using fountain code, and the M second data packets are sent to a receive end, so that security of encoding to-be-transmitted data by using the fountain code is improved.

Further, in this embodiment shown in FIG. 1, methods for encrypting the at least one first data packet in the N first data packets by the processing module 11 may be classified into two types. In a first method, the processing module 11 is specifically configured to encrypt the at least one first data packet in the N first data packets, and add, to a header of each of the first data packets, indication information indicating whether the first data packet is encrypted, to obtain the N encrypted first data packets. For example, in a header of each data packet in the N first data packets, the indication information indicating whether the first data packet is encrypted is carried by using 1 bit. The bit is set to 1 if the data packet is encrypted; or the bit is set to 0 if the data packet is not encrypted. In this way, after the receive end receives the N second data packets sent by the sending module 12, and obtains the N encrypted first data packets by means of decoding by using fountain code, the receive end can learn, from a header of an encrypted first data packet, whether the first data packet is encrypted, and therefore, can select a corresponding encrypted first data packet for decryption to obtain the original data.

In a second method, the processing module 11 encrypts the at least one first data packet in the N first data packets according to a preset encryption method. A decryption method corresponding to the encryption method may be stored at the receive end. Therefore, after receiving the N second data packets, the receive end can obtain the original data by means of decoding and decryption according to the preset decryption method. If no decryption method corresponding to the encryption method is stored at the receive end, the sending module 12 may further send encryption notification information to the receive end before sending the M second data packets to the receive end. The encryption notification information includes indication information indicating that the original data is first encrypted and then encoded by using the fountain code, and indication information indicating whether each of the first data packets is encrypted. Therefore, according to the received encryption method, the receive end obtains the original data by means of decoding and decryption.

Further, in this embodiment shown in FIG. 1, the sending module 12 is specifically configured to send the decryption notification information to the receive end by using a radio resource control (Radio Resource Control, RRC) configuration message. Because the receive end needs to decode and decrypt the received data according to information in a decryption notification message, the receive end needs to obtain the information in the decryption notification message before receiving the data. The RRC configuration message is sent when the transmit end establishes an RRC connection with the receive end, and sending the RRC configuration message is necessarily performed before sending the data. Therefore, the sending module 12 may send the decryption notification information to the receive end by using the RRC configuration message.

In another embodiment of the encryption and transmission apparatus shown in FIG. 1, if a size of to-be-transmitted data is less than a data packet size preset by the data encryption and transmission apparatus, the processing module 11 is further configured to: before evenly partitioning the original data into the N first data packets, successively combine at least two pieces of to-be-transmitted data to generate combined to-be-transmitted data, where the combined to-be-transmitted data is greater than or equal to the data packet size preset by the data encryption and transmission apparatus; and if the combined to-be-transmitted data is greater than the data packet size preset by the data encryption and transmission apparatus, partition a last piece of to-be-transmitted data, so that remaining combined to-be-transmitted data is equal to the data packet size preset by the data encryption and transmission apparatus, and use the remaining combined to-be-transmitted data as the original data; or if the combined to-be-transmitted data is equal to the data packet size preset by the data encryption and transmission apparatus, use the combined to-be-transmitted data as the original data.

Specifically, in a wireless communications system, a data packet size of data that can be sent by the transmit end once generally varies with system configuration. However, for fixed system configuration, a size of a data packet sent by the transmit end once is determined. However, at the transmit end, sizes of various pieces of data that need to be sent are different. For example, a size of a data packet that can be sent by the transmit end once is 10k bits, and data that needs to be sent by the transmit end is five 2k-bit data packets; and in this case, if the transmit end sends only one 2k-bit data packet once, resources are quite wasted. For another example, a size of a data packet that can be sent by the transmit end once is 10k bits, and data that needs to be sent by the transmit end is two 15k-bit data packets; and in this case, the transmit end cannot completely send one 15k-bit data packet once.

Data that needs to be sent by the data encryption and transmission apparatus provided in this embodiment is referred to as to-be-transmitted data. A size of a data packet that can be sent by the data encryption and transmission apparatus once is referred to as the data packet size preset by the data encryption and transmission apparatus. In this case, if the size of the to-be-transmitted data is less than the data packet size preset by the data encryption and transmission apparatus, that is, the data that needs to be sent by the data encryption and transmission apparatus is less than the size of the data packet that can be sent by the data encryption and transmission apparatus once, the processing module 11 successively combines the at least two pieces of to-be-transmitted data before evenly partitioning the original data into the N first data packets, to generate the combined to-be-transmitted data. The combined to-be-transmitted data is greater than or equal to the data packet size preset by the data encryption and transmission apparatus. That is, the to-be-transmitted data is successively combined until the combined to-be-transmitted data is greater than or equal to the data packet size preset by the data encryption and transmission apparatus. Then, the combined to-be-transmitted data is determined. If the combined to-be-transmitted data is equal to the data packet size preset by the data encryption and transmission apparatus, the combined to-be-transmitted data is used as the original data. If the combined to-be-transmitted data is greater than the data packet size preset by the data encryption and transmission apparatus, the last piece of to-be-transmitted data is partitioned, so that the remaining combined to-be-transmitted data is equal to the data packet size preset by the data encryption and transmission apparatus, and the remaining combined to-be-transmitted data is used as the original data.

That is, first, the processing module 11 combines multiple pieces of to-be-transmitted data and processes the multiple pieces of to-be-transmitted data into the original data. A size of the original data is equal to the data packet size preset by the data encryption and transmission apparatus. Then the processing module 11 evenly partitions the original data into the N first data packets. In this way, it can be ensured that data sent by the data encryption and transmission apparatus each time is maximum data that can be sent by the data encryption and transmission apparatus, so as to make full use of resources.

In addition, if a size of to-be-transmitted data is greater than a data packet size preset by the data encryption and transmission apparatus, the data encryption and transmission apparatus cannot completely send the to-be-transmitted data once, and needs to first partition the to-be-transmitted data. In this case, the processing module 11 is further configured to obtain the original data from the to-be-transmitted data by means of partition before evenly partitioning the original data into the N first data packets. A size of the original data is equal to the data packet size preset by the data encryption and transmission apparatus.

Corresponding to the foregoing specific example, if a data packet size preset by the data encryption and transmission apparatus is 10k bits, and data to be transmitted by the data encryption and transmission apparatus is five 2k-bit data packets; and in this case, the processing module 11 first combines the five pieces of 2k-bit to-be-transmitted data into one 10k-bit data packet. For another example, a data packet size preset by the data encryption and transmission apparatus is 10k bits, and data to be transmitted by the data encryption and transmission apparatus is two 15k-bit data packets; and in this case, the processing module 11 first partitions the first 15k-bit to-be-transmitted data into two data packets: a 10k-bit data packet and a 5k-bit data packet, then partitions the second 15k-bit to-be-transmitted data into two data packets: a 5k-bit data packet and a 10k-bit data packet, and combines the two 5k-bit data packets into one 10k-bit data packet, so as to obtain three 10k-bit data packets in total.

Further, in this embodiment shown in FIG. 1, the original data is PDCP layer data.

FIG. 2 is a schematic structural diagram of Embodiment 2 of a data encryption and transmission apparatus according to the embodiments of the present invention. As shown in FIG. 2, the data encryption and transmission apparatus in this embodiment includes: a receiving module 21 and a processing module 22.

The receiving module 21 is configured to receive N second data packets from a transmit end, where the second data packets are encoded by using fountain code, and N is a positive integer.

Specifically, the data encryption and transmission apparatus provided in this embodiment is located at a data receive end, and is configured to receive data encoded by using the fountain code and encrypted.

First, the data received by the data encryption and transmission apparatus in this embodiment may be the data sent by the encryption and transmission apparatus in the embodiment shown in FIG. 1. At a data transmit end, original data is partitioned into N first data packets. After the N first data packets are encrypted, the data is encoded into M second data packets by using the fountain code, and the M second data packets are sent to a receive end. According to an encoding principle of the fountain code, as long as the N second data packets are received, the original data can be obtained by means of decoding.

Therefore, the receiving module 21 is configured to receive the N second data packets sent by the transmit end, where N is a positive integer.

The processing module 22 is configured to decode, by using fountain code, the N second data packets received by the receiving module 21, to obtain N first data packets; decrypt at least one first data packet in the N first data packets to obtain N decrypted first data packets; and combine the N decrypted first data packets into original data.

Specifically, because the N second data packets received by the receiving module 21 are sent after encryption is first performed and then encoding is performed at the data transmit end, the N second data packets need to be first decoded and then decrypted, so that the original data can be obtained.

After the receiving module 21 receives the N second data packets, the processing module 22 decodes, by using the fountain code, the N second data packets to obtain the N first data packets.

Because at least one of the N first data packets is encrypted at the data transmit end, the at least one first data packet in the N first data packets obtained by the processing module 22 is encrypted. The processing module 22 needs to decrypt the at least one first data packet in the N first data packets to obtain the N decrypted first data packets. A decryption algorithm used by the processing module 22 and an encryption algorithm used by the transmit end need to be mutually inverse.

Further, before decrypting the at least one first data packet, the processing module 22 further needs to learn which first data packet is encrypted. According to different methods used by the transmit end to encrypt data, the processing module 22 may obtain, from headers of the N first data packets, indication messages indicating whether the first data packets are encrypted, so as to learn an encrypted first data packet; or a first data packet can learn, according to an encryption notification message sent by the transmit end, an encryption method used by an encryption end, so as to learn an encrypted first data packet.

After obtaining the N decrypted first data packets, the processing module 22 may combine the N decrypted first data packets into the original data, so as to complete data encryption and transmission.

In this embodiment, after N second data packets are received, first, the N second data packets are decoded into N first data packets by using fountain code, then the N first data packets are decrypted into N decrypted first data packets by using a decryption algorithm, and finally, the N decrypted first data packets are combined into original data, so that security of encoding to-be-transmitted data by using the fountain code is improved.

Further, in this embodiment shown in FIG. 2, the decryption module 22 is specifically configured to obtain, from a header of each of the first data packets, indication information indicating whether the first data packet is encrypted; and decrypt a first data packet whose indication information indicates that the first data packet is encrypted, to obtain the N decrypted first data packets. This is a processing method used when the transmit end adds, to a header of a first data packet, the indication information indicating whether the first data packet is encrypted when encrypting the first data packet. For example, in a header of each data packet in the N first data packets, the transmit end uses 1 bit to carry the indication information indicating whether the first data packet is encrypted. The bit is set to 1 if the data packet is encrypted; or the bit is set to 0 if the data packet is not encrypted. In this way, after obtaining the N first data packets, the processing module 22 can learn, from the header of each first data packet, whether the first data packet is encrypted, and therefore, can select a corresponding decryption algorithm to decrypt the first data packet, so as to obtain the N decrypted first data packets.

Further, in this embodiment shown in FIG. 2, the receiving module 21 is further configured to: before receiving the N second data packets from the transmit end, receive encryption notification information sent by the transmit end, where the encryption notification information includes indication information indicating that the original data is first encrypted and then encoded by using the fountain code.

Specifically, because the data received in this embodiment is first encrypted and then encoded by using the fountain code, to properly decode and decrypt the data, the receiving module 21 is further configured to: before receiving the N second data packets from the transmit end, receive the encryption notification information sent by the transmit end, where the encryption notification information includes the indication information indicating that the original data is first encrypted and then encoded by using the fountain code.

Further, in this embodiment shown in FIG. 2, the receiving module 21 is further configured to: before receiving the N second data packets from the transmit end, receive encryption notification information sent by the transmit end, where the encryption notification information includes indication information indicating that the original data is first encrypted and then encoded by using the fountain code, and indication information indicating whether each of the first data packets is encrypted. The processing module 22 is specifically configured to decrypt, according to the indication information indicating whether each of the first data packets is encrypted, the at least one first data packet in the N first data packets to obtain the N decrypted first data packets.

Specifically, if the encryption notification information received by the receiving module 21 includes the indication information indicating whether each of the first data packets is encrypted, the decryption module 22 may learn, according to the indication information, which first data packet is encrypted, so as to decrypt a corresponding first data packet.

Further, in this embodiment shown in FIG. 2, the receiving module 21 is specifically configured to receive the decryption notification information sent by the transmit end by using an RRC configuration message. Because the data encryption and transmission apparatus shown in FIG. 2 needs to decode and decrypt the received data according to information in a decryption notification message, the data encryption and transmission apparatus needs to obtain the information in the decryption notification message before receiving the data. The RRC configuration message is sent when the transmit end establishes an RRC connection with the receive end, and sending the RRC configuration message is necessarily performed before sending the data. Therefore, the receiving module 21 may receive, by using the RRC configuration message, the decryption notification information sent by the transmit end.

In another embodiment of the encryption and transmission apparatus shown in FIG. 2, if a size of to-be-transmitted data is less than a data packet size preset by the data encryption and transmission apparatus, the processing module 22 is further configured to partition the original data into at least two pieces of to-be-transmitted data after combining the N decrypted first data packets into the original data.

Specifically, in a wireless communications system, a data packet size of data that can be sent by the transmit end once generally varies with system configuration. However, for fixed system configuration, a size of a data packet sent by the transmit end once is determined. However, at the transmit end, sizes of various pieces of data that need to be sent are different. For example, a size of a data packet that can be sent by the transmit end once is 10k bits, and data that needs to be sent by the transmit end is five 2k-bit data packets; and in this case, if the transmit end sends only one 2k-bit data packet once, resources are quite wasted. For another example, a size of a data packet that can be sent by the transmit end once is 10k bits, and data that needs to be sent by the transmit end is two 15k-bit data packets; and in this case, the transmit end cannot completely send one 15k-bit data packet once.

Therefore, the original data obtained by means of receiving, decoding, and decryption by the data encryption and transmission apparatus located at the receive end may not be to-be-sent data that needs to be sent by the transmit end. Data that needs to be sent by the receive end is referred to as to-be-transmitted data. A size of a data packet received by the data encryption and transmission apparatus once is referred to as the data packet size preset by the data encryption and transmission apparatus. Therefore, if the size of the to-be-transmitted data is less than the data packet size preset by the data encryption and transmission apparatus, the processing module 22 partitions the original data into the at least two pieces of to-be-transmitted data after combining the N decrypted first data packets into the original data.

In addition, if a size of to-be-transmitted data is greater than a data packet size preset by the data encryption and transmission apparatus, the processing module 22 is further configured to combine the original data received at least twice into the to-be-transmitted data after combining the N decrypted first data packets into the original data.

Further, in this embodiment shown in FIG. 2, the original data is PDCP layer data.

Embodiments shown in FIG. 1 and FIG. 2 provide a data encryption and transmission apparatus that first encrypts data and then encodes the data by using fountain code. The following provides another data encryption and transmission apparatus.

FIG. 3 is a schematic structural diagram of Embodiment 3 of a data encryption and transmission apparatus according to the embodiments of the present invention. As shown in FIG. 3, the data encryption and transmission apparatus in this embodiment includes: a processing module 31 and a sending module 32.

The processing module 31 is configured to evenly partition original data into N first data packets, where N is a positive integer; encode, by using fountain code, the N first data packets to obtain M second data packets, where M is a positive integer, and M>N; and encrypt at least M-N+1 second data packets in the M second data packets to obtain M encrypted second data packets.

Specifically, the data encryption and transmission apparatus provided in this embodiment is located at a data transmit end, and is configured to encode data by using the fountain code, encrypt the data, and then send the data to a data receive end.

Because the data needs to be encoded by using the fountain code, it can be learned according to an encoding principle of the fountain code that the original data first needs to be partitioned into several pieces. Therefore, the data encryption and transmission apparatus provided in this embodiment includes the processing module 31, which is configured to evenly partition the original data into the N first data packets, where N is a positive integer. The original data herein is data that needs to be sent by the transmit end to a receive end. A size of the original data is configured according to a system capability. The quantity N of first data packets and a size of a first data packet are configured according to a requirement of an encoding algorithm of the fountain code. Generally, a larger N, that is, a smaller size of a first data packet, indicates better performance of restoring data by the receive end, but more system resources needed during encoding and decoding; and vice versa.

A difference between the data encryption and transmission apparatus provided in this embodiment and the embodiment shown in FIG. 1 lies in that: in the embodiment shown in FIG. 1, data is first encrypted and then encoded by using the fountain code. However, in this embodiment, data is first encoded by using the fountain code and then encrypted.

After evenly partitioning the original data into the N first data packets, the processing module 31 encodes, by using the fountain code, the N first data packets to obtain the M second data packets, where M is a positive integer, and M>N.

It can be learned according to the encoding principle of the fountain code that in the M second data packets obtained by means of encoding by the processing module 31, if a device receives any N second data packets, the device can obtain the original data by means of decoding. Therefore, the processing module 31 needs to encrypt the at least M-N+1 second data packets when encrypting the M second data packets, that is, a maximum of N-1 second data packets are not encrypted. In this way, even when an illegal or an unlicensed device receives the N second data packets, at least one second data packet in the N second data packets is encrypted, and the device cannot obtain the original data sent by the transmit end without a corresponding decryption algorithm.

Preferably, the processing module 31 may further encrypt a maximum of M-1 second data packets, that is, the processing module 31 does not encrypt all the M second data packets. In this way, not only an objective of performing data encryption and transmission can be achieved, but also an encryption computation amount is reduced, thereby saving system resources.

The sending module 32 is configured to send the M encrypted second data packets obtained by the processing module 31 to a receive end.

Specifically, the data encryption and transmission apparatus provided in this embodiment further includes the sending module 32, which is configured to send the M encrypted second data packets to the receive end.

In this embodiment, after original data is evenly partitioned into N first data packets, first, the N first data packets are encoded into M second data packets by using fountain code, then at least M-N+1 second data packets are encrypted by using an encryption algorithm, and M encrypted second data packets are sent to a receive end, so that security of encoding to-be-transmitted data by using the fountain code is improved.

Further, in this embodiment shown in FIG. 3, the processing module 31 is specifically configured to encrypt the at least M-N+1 second data packets in the M second data packets, and add, to a header of each of the second data packets, indication information indicating whether the second data packet is encrypted, to obtain the M encrypted second data packets. For example, in a header of each data packet in the M second data packets, the indication information indicating whether the second data packet is encrypted is carried by using 1 bit. The bit is set to 1 if the data packet is encrypted; or the bit is set to 0 if the data packet is not encrypted. In this way, after the receive end receives the M encrypted second data packets sent by the sending module 32, the receive end can learn, from a header of an encrypted second data packet, whether the second data packet is encrypted, and therefore, can select a corresponding encrypted second data packet for decryption, so as to obtain the original data.

Further, in this embodiment shown in FIG. 3, the sending module 32 is further configured to send encryption notification information to the receive end before sending the M encrypted second data packets obtained by the processing module 31 to the receive end, where the encryption notification information includes indication information indicating that the original data is first encoded by using the fountain code and then encrypted.

Specifically, in this embodiment described in FIG. 3, the data is first encoded by using the fountain code and then encrypted. To ensure that the receive end can properly decode and decrypt the data, the sending module 32 further sends the encryption notification information to the receive end before sending the M encrypted second data packets to the receive end. The encryption notification information includes the indication information indicating that the original data is first encoded by using the fountain code and then encrypted.

Further, in this embodiment shown in FIG. 3, the sending module 32 is specifically configured to send the decryption notification information to the receive end by using a radio resource control RRC configuration message. Because the receive end needs to decode and decrypt the received data according to information in a decryption notification message, the receive end needs to obtain the information in the decryption notification message before receiving the data. The RRC configuration message is sent when the transmit end establishes an RRC connection with the receive end, and sending the RRC configuration message is necessarily performed before sending the data. Therefore, the sending module 54 may send the decryption notification information to the receive end by using the RRC configuration message.

In another embodiment of the data encryption and transmission apparatus shown in FIG. 3, if a size of to-be-transmitted data is less than a data packet size preset by the data encryption and transmission apparatus, the processing module 31 is further configured to: before evenly partitioning the original data into the N first data packets, successively combine at least two pieces of to-be-transmitted data to generate combined to-be-transmitted data, where the combined to-be-transmitted data is greater than or equal to the data packet size preset by the data encryption and transmission apparatus; and if the combined to-be-transmitted data is greater than the data packet size preset by the data encryption and transmission apparatus, partition a last piece of to-be-transmitted data, so that remaining combined to-be-transmitted data is equal to the data packet size preset by the data encryption and transmission apparatus, and use the remaining combined to-be-transmitted data as the original data; or if the combined to-be-transmitted data is equal to the data packet size preset by the data encryption and transmission apparatus, use the combined to-be-transmitted data as the original data.

Specifically, in a wireless communications system, a data packet size of data that can be sent by the transmit end once generally varies with system configuration. However, for fixed system configuration, a size of a data packet sent by the transmit end once is determined. However, at the transmit end, sizes of various pieces of data that need to be sent are different.

Data that needs to be sent by the data encryption and transmission apparatus provided in this embodiment is referred to as to-be-transmitted data. A size of a data packet that can be sent by the data encryption and transmission apparatus once is referred to as the data packet size preset by the data encryption and transmission apparatus. In this case, if the size of the to-be-transmitted data is less than the data packet size preset by the data encryption and transmission apparatus, that is, the data that needs to be sent by the data encryption and transmission apparatus is less than the size of the data packet that can be sent by the data encryption and transmission apparatus once, the processing module 31 successively combines the at least two pieces of to-be-transmitted data before evenly partitioning the original data into the N first data packets, to generate the combined to-be-transmitted data. The combined to-be-transmitted data is greater than or equal to the data packet size preset by the data encryption and transmission apparatus. That is, the to-be-transmitted data is successively combined until the combined to-be-transmitted data is greater than or equal to the data packet size preset by the data encryption and transmission apparatus. Then, the combined to-be-transmitted data is determined. If the combined to-be-transmitted data is equal to the data packet size preset by the data encryption and transmission apparatus, the combined to-be-transmitted data is used as the original data. If the combined to-be-transmitted data is greater than the data packet size preset by the data encryption and transmission apparatus, the last piece of to-be-transmitted data is partitioned, so that the remaining combined to-be-transmitted data is equal to the data packet size preset by the data encryption and transmission apparatus, and the remaining combined to-be-transmitted data is used as the original data.

That is, first, the processing module 31 combines multiple pieces of to-be-transmitted data and processes the multiple pieces of to-be-transmitted data into the original data. A size of the to-be-transmitted data is equal to the data packet size preset by the data encryption and transmission apparatus. Then the processing module 31 evenly partitions the original data into the N first data packets. In this way, it can be ensured that data sent by the data encryption and transmission apparatus each time is maximum data that can be sent by the data encryption and transmission apparatus, so as to make full use of resources.

In addition, if a size of to-be-transmitted data is greater than a data packet size preset by the data encryption and transmission apparatus, the data encryption and transmission apparatus cannot completely send the to-be-transmitted data once, and needs to first partition the to-be-transmitted data. In this case, the processing module 31 is further configured to obtain the original data from the to-be-transmitted data by means of partition before evenly partitioning the original data into the N first data packets, where a size of the original data is equal to the data packet size preset by the data encryption and transmission apparatus.

Further, in this embodiment shown in FIG. 3, the original data is PDCP layer data.

FIG. 4 is a schematic structural diagram of Embodiment 4 of a data encryption and transmission apparatus according to the embodiments of the present invention. As shown in FIG. 4, the data encryption and transmission apparatus in this embodiment includes: a receiving module 41 and a processing module 42.

The receiving module 41 is configured to receive N encrypted second data packets from a transmit end, where the encrypted second data packets are encoded by using fountain code, and N is a positive integer.

Specifically, the data encryption and transmission apparatus provided in this embodiment is located at a data receive end, and is configured to receive data encoded by using the fountain code and encrypted.

First, the data received by the data encryption and transmission apparatus in this embodiment may be the data sent by the encryption and transmission apparatus in the embodiment shown in FIG. 3. At a data transmit end, original data is partitioned into N first data packets. After the data is encoded into M second data packets by using the fountain code, the M second data packets are encrypted and sent to a receive end. According to an encoding principle of the fountain code, as long as the N encrypted second data packets are received, the original data can be obtained by means of decryption and decoding.

Therefore, the receiving module 41 is configured to receive the N encrypted second data packets sent by the transmit end, where N is a positive integer.

The processing module 42 is configured to decrypt at least one encrypted second data packet in the N encrypted second data packets received by the receiving module 41, to obtain N second data packets; decode, by using fountain code, the N second data packets to obtain N first data packets; and combine the N first data packets into original data.

Specifically, because the N encrypted second data packets received by the receiving module 41 are sent after encoding is first performed and then encryption is performed at the data transmit end, the N encrypted second data packets need to be first decrypted and then decoded, so that the original data can be obtained.

Because at least M-N+1 of the M second data packets are encrypted at the data transmit end, that is, a maximum of N-1 second data packets are not encrypted, at least one of the N encrypted second data packets received by the receiving module 41 is encrypted. Therefore, the processing module 42 needs to decrypt at least one of the N encrypted second data packets to obtain the N second data packets. A decryption algorithm used by the processing module 42 and an encryption algorithm used by the transmit end need to be mutually inverse.

Further, before decrypting the at least one encrypted second data packet, the processing module 42 further needs to learn which encrypted second data packet undergoes encryption. Because when encrypting the at least M-N+1 second data packets, the transmit end adds, to a header of an encrypted second data packet, indication information indicating whether the second data packet is encrypted, the processing module 42 may learn from the header of the encrypted second data packet whether the encrypted second data packet is encrypted.

After obtaining the N decrypted second data packets, the processing module 42 may decode, by using the fountain code, the N second data packets to obtain the N first data packets.

After obtaining the N first data packets, the processing module 42 may combine the N first data packets into the original data, so as to complete data encryption and transmission.

In this embodiment, after receiving N encrypted second data packets, first, the N encrypted second data packets are decrypted into N second data packets by using a decryption algorithm, then the N second data packets are decode into N first data packets by using fountain code; and finally, the N first data packets are combined into original data, so that security of encoding to-be-transmitted data by using fountain code is improved.

Further, in this embodiment shown in FIG. 4, the processing module 42 is specifically configured to obtain, from a header of each of the encrypted second data packets, indication information indicating whether the second data packet is encrypted; and decrypt an encrypted second data packet whose indication information indicates that the second data packet is encrypted, to obtain the N second data packets. For example, in a header of each data packet in the M encrypted second data packets, the transmit end uses 1 bit to carry the indication information indicating whether the second data packet is encrypted. The bit is set to 1 if the data packet is encrypted; or the bit is set to 0 if the data packet is not encrypted. In this way, the processing module 42 can learn, from the header of the encrypted second data packet, whether the second data packet is encrypted, and therefore, can select a corresponding decryption algorithm to decrypt the encrypted second data packet, so as to obtain the N second data packets.

Further, in this embodiment shown in FIG. 4, the receiving module 41 is further configured to: before receiving the N encrypted second data packets from the transmit end, receive encryption notification information sent by the transmit end, where the encryption notification information includes indication information indicating that the original data is first encoded by using the fountain code and then encrypted.

Specifically, because the data received in this embodiment is first encoded by using the fountain code and then encrypted, to properly decode and decrypt the data, the receiving module 41 is further configured to: before receiving the N encrypted second data packets from the transmit end, receive the encryption notification information sent by the transmit end, where the encryption notification information includes the indication information indicating that the original data is first encoded by using the fountain code and then encrypted.

Further, in this embodiment shown in FIG. 4, the receiving module 41 is specifically configured to receive the decryption notification information sent by the transmit end by using an RRC configuration message. Because the data encryption and transmission apparatus shown in FIG. 4 needs to decode and decrypt the received data according to information in a decryption notification message, the data encryption and transmission apparatus needs to obtain the information in the decryption notification message before receiving the data. The RRC configuration message is sent when the transmit end establishes an RRC connection with the receive end, and sending the RRC configuration message is necessarily performed before sending the data. Therefore, the receiving module 41 may receive, by using the RRC configuration message, the decryption notification information sent by the transmit end.

In another embodiment of the data encryption and transmission apparatus shown in FIG. 4, if a size of to-be-transmitted data is less than a data packet size preset by the data encryption and transmission apparatus, the processing module 42 is further configured to partition the original data into at least two pieces of to-be-transmitted data after combining the N first data packets into the original data.

Specifically, in a wireless communications system, a data packet size of data that can be sent by the transmit end once generally varies with system configuration. However, for fixed system configuration, a size of a data packet sent by the transmit end once is determined. However, at the transmit end, sizes of various pieces of data that need to be sent are different. For example, a size of a data packet that can be sent by the transmit end once is 10k bits, and data that needs to be sent by the transmit end is five 2k-bit data packets; and in this case, if the transmit end sends only one 2k-bit data packet once, resources are quite wasted. For another example, a size of a data packet that can be sent by the transmit end once is 10k bits, and data that needs to be sent by the transmit end is two 15k-bit data packets; and in this case, the transmit end cannot completely send one 15k-bit data packet once.

Therefore, the original data obtained by means of receiving, decoding, and decryption by the data encryption and transmission apparatus located at the receive end may not be to-be-sent data that needs to be sent by the transmit end. Data that needs to be sent by the receive end is referred to as to-be-transmitted data. A size of a data packet received by the data encryption and transmission apparatus once is referred to as the data packet size preset by the data encryption and transmission apparatus. Therefore, if the size of the to-be-transmitted data is less than the data packet size preset by the data encryption and transmission apparatus, the processing module 42 partitions the original data into the at least two pieces of to-be-transmitted data after combining the N decrypted first data packets into the original data.

In addition, if a size of to-be-transmitted data is greater than a data packet size preset by the data encryption and transmission apparatus, the processing module 42 is further configured to combine the original data received at least twice into the to-be-transmitted data after combining the N decrypted first data packets into the original data.

Further, in this embodiment shown in FIG. 4, the original data is PDCP layer data.

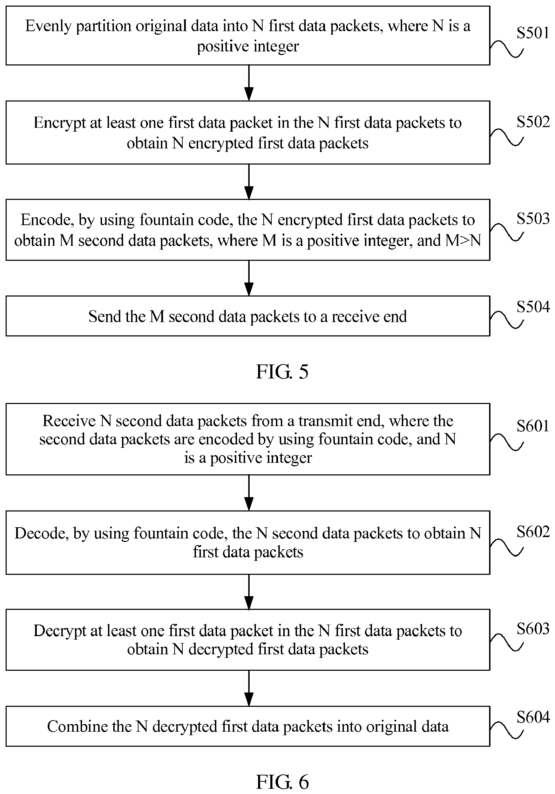

FIG. 5 is a flowchart of Embodiment 1 of a data encryption and transmission method according to an embodiment of the present invention. As shown in FIG. 5, the method in this embodiment includes the following steps.

Step S501: Evenly partition original data into N first data packets, where N is a positive integer.

Step S502: Encrypt at least one first data packet in the N first data packets to obtain N encrypted first data packets.

Step S503: Encode, by using fountain code, the N encrypted first data packets to obtain M second data packets, where M is a positive integer, and M>N.

Step S504: Send the M second data packets to a receive end.

The data encryption and transmission method in this embodiment is used to complete processing by the data encryption and transmission apparatus shown in FIG. 1, and an implementation principle and a technical effect of the data encryption and transmission method are similar, which are not described herein again.

Further, in this embodiment shown in FIG. 5, step S502 includes: encrypting the at least one first data packet in the N first data packets, and adding, to a header of each of the first data packets, indication information indicating whether the first data packet is encrypted, to obtain the N encrypted first data packets.

Further, in this embodiment shown in FIG. 5, before step S504, the method further includes: sending encryption notification information to the receive end, where the encryption notification information includes indication information indicating that the original data is first encrypted and then encoded by using the fountain code.

Further, in this embodiment shown in FIG. 5, before step S504, the method further includes: sending encryption notification information to the receive end, where the encryption notification information includes indication information indicating that the original data is first encrypted and then encoded by using the fountain code, and indication information indicating whether each of the first data packets is encrypted.

Further, in this embodiment shown in FIG. 5, the sending encryption notification information to the receive end includes: sending the decryption notification information to the receive end by using an RRC configuration message.

Further, in this embodiment shown in FIG. 5, if a size of to-be-transmitted data is less than a data packet size preset in the data encryption and transmission method, before step S501, the method further includes: successively combining at least two pieces of to-be-transmitted data to generate combined to-be-transmitted data, where the combined to-be-transmitted data is greater than or equal to the data packet size preset in the data encryption and transmission method; and if the combined to-be-transmitted data is greater than the data packet size preset in the data encryption and transmission method, partitioning a last piece of to-be-transmitted data, so that remaining combined to-be-transmitted data is equal to the data packet size preset in the data encryption and transmission method, and using the remaining combined to-be-transmitted data as the original data; or if the combined to-be-transmitted data is equal to the data packet size preset in the data encryption and transmission method, using the combined to-be-transmitted data as the original data.

Further, in this embodiment shown in FIG. 5, if a size of to-be-transmitted data is greater than a data packet size preset in the data encryption and transmission method, before step S501, the method further includes: obtaining the original data from the to-be-transmitted data by means of partition, where a size of the original data is equal to the data packet size preset in the data encryption and transmission method.

Further, in this embodiment shown in FIG. 5, the original data is PDCP layer data.

FIG. 6 is a flowchart of Embodiment 2 of a data encryption and transmission method according to an embodiment of the present invention. As shown in FIG. 6, the method in this embodiment includes the following steps.

Step S601: Receive N second data packets from a transmit end, where the second data packets are encoded by using fountain code, and N is a positive integer.

Step S602: Decode, by using fountain code, the N second data packets to obtain N first data packets.

Step S603: Decrypt at least one first data packet in the N first data packets to obtain N decrypted first data packets.

Step S604: Combine the N decrypted first data packets into original data.

The data encryption and transmission method in this embodiment is used to complete processing by the data encryption and transmission apparatus shown in FIG. 2, and an implementation principle and a technical effect of the data encryption and transmission method are similar, which are not described herein again.

Further, in this embodiment shown in FIG. 6, step S603 includes: obtaining, from a header of each of the first data packets, indication information indicating whether the first data packet is encrypted; and decrypting a first data packet whose indication information indicates that the first data packet is encrypted, to obtain the N decrypted first data packets.

Further, in this embodiment shown in FIG. 6, before step S601, the method further includes: receiving encryption notification information sent by the transmit end, where the encryption notification information includes indication information indicating that the original data is first encrypted and then encoded by using the fountain code.

Further, in this embodiment shown in FIG. 6, before step S601, the method further includes: receiving encryption notification information sent by the transmit end, where the encryption notification information includes indication information indicating that the original data is first encrypted and then encoded by using the fountain code, and indication information indicating whether each of the first data packets is encrypted. Step S603 includes: decrypting, according to the indication information indicating whether each of the first data packets is encrypted, the at least one first data packet in the N first data packets to obtain the N decrypted first data packets.

Further, in this embodiment shown in FIG. 6, the receiving encryption notification information sent by the transmit end includes: receiving the decryption notification information sent by the transmit end by using an RRC configuration message.

Further, in this embodiment shown in FIG. 6, if a size of to-be-transmitted data is less than a data packet size preset in the data encryption and transmission method, after step S604, the method further includes: partitioning the original data into at least two pieces of to-be-transmitted data.

Further, in this embodiment shown in FIG. 6, if a size of to-be-transmitted data is greater than a data packet size preset in the data encryption and transmission method, after step S604, the method further includes: combining the original data received at least twice into the to-be-transmitted data.

Further, in this embodiment shown in FIG. 6, the original data is PDCP layer data.

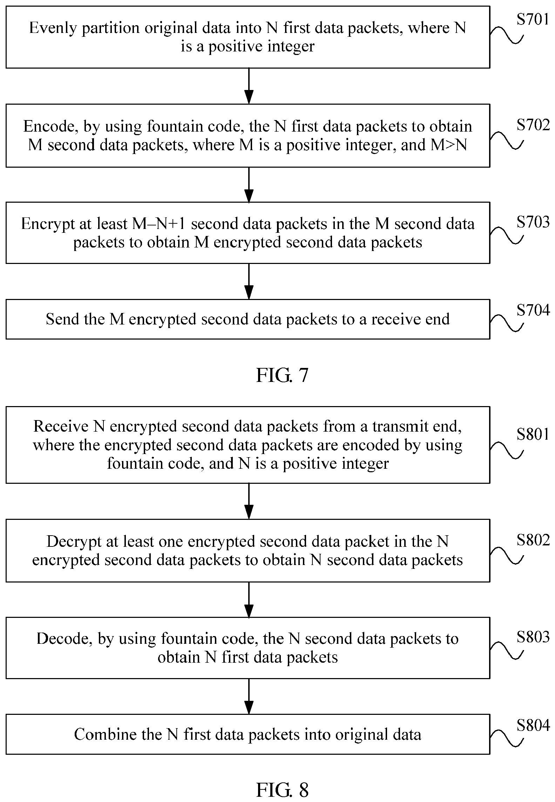

FIG. 7 is a flowchart of Embodiment 3 of a data encryption and transmission method according to an embodiment of the present invention. As shown in FIG. 7, the method in this embodiment includes the following steps.

Step S701: Evenly partition original data into N first data packets, where N is a positive integer.

Step S702: Encode, by using fountain code, the N first data packets to obtain M second data packets, where M is a positive integer, and M>N.

Step S703: Encrypt at least M-N+1 second data packets in the M second data packets to obtain M encrypted second data packets.

Step S704: Send the M encrypted second data packets to a receive end.

The data encryption and transmission method in this embodiment is used to complete processing by the data encryption and transmission apparatus shown in FIG. 3, and an implementation principle and a technical effect of the data encryption and transmission method are similar, which are not described herein again.

Further, in this embodiment shown in FIG. 7, step S703 includes: encrypting the at least M-N+1 second data packets in the M second data packets, and adding, to a header of each of the second data packets, indication information indicating whether the second data packet is encrypted, to obtain the M encrypted second data packets.

Further, in this embodiment shown in FIG. 7, before step S704, the method further includes: sending encryption notification information to the receive end, where the encryption notification information includes indication information indicating that the original data is first encoded by using the fountain code and then encrypted.

Further, in this embodiment shown in FIG. 7, the sending encryption notification information to the receive end includes: sending the decryption notification information to the receive end by using an RRC configuration message.

Further, in this embodiment shown in FIG. 7, if a size of to-be-transmitted data is less than a data packet size preset in the data encryption and transmission method, before step S701, the method further includes: successively combining at least two pieces of to-be-transmitted data to generate combined to-be-transmitted data, where the combined to-be-transmitted data is greater than or equal to the data packet size preset in the data encryption and transmission method; and if the combined to-be-transmitted data is greater than the data packet size preset in the data encryption and transmission method, partitioning a last piece of to-be-transmitted data, so that remaining combined to-be-transmitted data is equal to the data packet size preset in the data encryption and transmission method, and using the remaining combined to-be-transmitted data as the original data; or if the combined to-be-transmitted data is equal to the data packet size preset in the data encryption and transmission method, using the combined to-be-transmitted data as the original data.

Further, in this embodiment shown in FIG. 7, if a size of to-be-transmitted data is greater than a data packet size preset in the data encryption and transmission method, before step S701, the method further includes: obtaining the original data from the to-be-transmitted data by means of partition, where a size of the original data is equal to the data packet size preset in the data encryption and transmission method.

Further, in this embodiment shown in FIG. 7, the original data is PDCP layer data.

FIG. 8 is a flowchart of Embodiment 4 of a data encryption and transmission method according to an embodiment of the present invention. As shown in FIG. 8, the method in this embodiment includes the following steps.

Step S801: Receive N encrypted second data packets from a transmit end, where the encrypted second data packets are encoded by using fountain code, and N is a positive integer.

Step S802: Decrypt at least one encrypted second data packet in the N encrypted second data packets to obtain N second data packets.

Step S803: Decode, by using fountain code, the N second data packets to obtain N first data packets.

Step S804: Combine the N first data packets into original data.

The data encryption and transmission method in this embodiment is used to complete processing by the data encryption and transmission apparatus shown in FIG. 4, and an implementation principle and a technical effect of the data encryption and transmission method are similar, which are not described herein again.

Further, in this embodiment shown in FIG. 8, step S802 includes: obtaining, from a header of each of the encrypted second data packets, indication information indicating whether the second data packet is encrypted; and decrypting an encrypted second data packet whose indication information indicates that the second data packet is encrypted, to obtain the N decrypted second data packets.

Further, in this embodiment shown in FIG. 8, before step S801, the method further includes: receiving encryption notification information sent by the transmit end, where the encryption notification information includes indication information indicating that the original data is first encoded by using the fountain code and then encrypted.

Further, in this embodiment shown in FIG. 8, the receiving encryption notification information sent by the transmit end includes: receiving the decryption notification information sent by the transmit end by using an RRC configuration message.

Further, in this embodiment shown in FIG. 8, if a size of to-be-transmitted data is less than a data packet size preset in the data encryption and transmission method, after step S804, the method further includes: partitioning the original data into at least two pieces of to-be-transmitted data.

Further, in this embodiment shown in FIG. 8, if a size of to-be-transmitted data is greater than a data packet size preset in the data encryption and transmission method, after step S804, the method further includes: combining the original data received at least twice into the to-be-transmitted data.

Further, in this embodiment shown in FIG. 8, the original data is PDCP layer data.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof. Therefore, the protection scope of the present invention shall be subject to the protection scope of the claims.

**Claims**

1. A data encryption and transmission apparatus, comprising:

   a processing module, configured to evenly partition original data into N first data packets, wherein N is a positive integer; encrypt at least one first data packet in the N first data packets to obtain N encrypted first data packets; and encode, by using fountain code, the N encrypted first data packets to obtain M second data packets, wherein M is a positive integer, and M>N; and
   a sending module, configured to send the M second data packets obtained by the processing module to a receive end.

2. The data encryption and transmission apparatus according to claim 1, wherein the processing module is specifically configured to encrypt the at least one first data packet in the N first data packets, and add, to a header of each of the first data packets, indication information indicating whether the first data packet is encrypted, to obtain the N encrypted first data packets.

3. The data encryption and transmission apparatus according to claim 1 or 2, wherein the sending module is further configured to send encryption notification information to the receive end before sending the M second data packets obtained by the processing module to the receive end, wherein the encryption notification information comprises indication information indicating that the original data is first encrypted and then encoded by using the fountain code.

4. The data encryption and transmission apparatus according to claim 1, wherein the sending module is further configured to send encryption notification information to the receive end before sending the M second data packets obtained by the processing module to the receive end, wherein the encryption notification information comprises indication information indicating that the original data is first encrypted and then encoded by using the fountain code, and indication information indicating whether each of the first data packets is encrypted.

5. The data encryption and transmission apparatus according to claim 3 or 4, wherein the sending module is specifically configured to send the decryption notification information to the receive end by using a radio resource control RRC configuration message.

6. The data encryption and transmission apparatus according to any one of claims 1 to 5, wherein if a size of to-be-transmitted data is less than a data packet size preset by the data encryption and transmission apparatus, the processing module is further configured to: before evenly partitioning the original data into the N first data packets, successively combine at least two pieces of to-be-transmitted data to generate combined to-be-transmitted data, wherein the combined to-be-transmitted data is greater than or equal to the data packet size preset by the data encryption and transmission apparatus; and if the combined to-be-transmitted data is greater than the data packet size preset by the data encryption and transmission apparatus, partition a last piece of to-be-transmitted data, so that remaining combined to-be-transmitted data is equal to the data packet size preset by the data encryption and transmission apparatus, and use the remaining combined to-be-transmitted data as the original data; or if the combined to-be-transmitted data is equal to the data packet size preset by the data encryption and transmission apparatus, use the combined to-be-transmitted data as the original data.

7. The data encryption and transmission apparatus according to any one of claims 1 to 5, wherein if a size of to-be-transmitted data is greater than a data packet size preset by the data encryption and transmission apparatus, the processing module is further configured to obtain the original data from the to-be-transmitted data by means of partition before evenly partitioning the original data into the N first data packets, wherein a size of the original data is equal to the data packet size preset by the data encryption and transmission apparatus.

8. The data encryption and transmission apparatus according to any one of claims 1 to 7, wherein the original data is Packet Data Convergence Protocol PDCP layer data.

9. A data encryption and transmission apparatus, comprising:

a receiving module, configured to receive N second data packets from a transmit end, wherein the second data packets are encoded by using fountain code, and N is a positive integer; and
a processing module, configured to decode, by using fountain code, the N second data packets received by the receiving module, to obtain N first data packets; decrypt at least one first data packet in the N first data packets to obtain N decrypted first data packets; and combine the N decrypted first data packets into original data.

10. The data encryption and transmission apparatus according to claim 9, wherein the processing module is specifically configured to obtain, from a header of each of the first data packets, indication information indicating whether the first data packet is encrypted; and decrypt a first data packet whose indication information indicates that the first data packet is encrypted, to obtain the N decrypted first data packets.

11. The data encryption and transmission apparatus according to claim 9 or 10, wherein the receiving module is further configured to: before receiving the N second data packets from the transmit end, receive encryption notification information sent by the transmit end, wherein the encryption notification information comprises indication information indicating that the original data is first encrypted and then encoded by using the fountain code.

12. The data encryption and transmission apparatus according to claim 9, wherein the receiving module is further configured to: before receiving the N second data packets from the transmit end, receive encryption notification information sent by the transmit end, wherein the encryption notification information comprises indication information indicating that the original data is first encrypted and then encoded by using the fountain code, and indication information indicating whether each of the first data packets is encrypted; and
the processing module is specifically configured to decrypt, according to the indication information indicating whether each of the first data packets is encrypted, the at least one first data packet in the N first data packets to obtain the N decrypted first data packets.

13. The data encryption and transmission apparatus according to claim 11 or 12, wherein the receiving module is specifically configured to receive the decryption notification information sent by the transmit end by using a radio resource control RRC configuration message.

14. The data encryption and transmission apparatus according to any one of claims 9 to 13, wherein if a size of to-be-transmitted data is less than a data packet size preset by the data encryption and transmission apparatus, the processing module is further configured to partition the original data into at least two pieces of to-be-transmitted data after combining the N decrypted first data packets into the original data.

15. The data encryption and transmission apparatus according to any one of claims 9 to 13, wherein if a size of to-be-transmitted data is greater than a data packet size preset by the data encryption and transmission apparatus, the processing module is further configured to combine the original data received at least twice into the to-be-transmitted data after combining the N decrypted first data packets into the original data.

16. The data encryption and transmission apparatus according to any one of claims 9 to 15, wherein the original data is Packet Data Convergence Protocol PDCP layer data.

17. A data encryption and transmission apparatus, comprising:

    a processing module, configured to evenly partition original data into N first data packets, wherein N is a positive integer; encode, by using fountain code, the N first data packets to obtain M second data packets, wherein M is a positive integer, and M>N; and encrypt at least M-N+1 second data packets in the M second data packets to obtain M encrypted second data packets; and
    a sending module, configured to send the M encrypted second data packets obtained by the processing module to a receive end.

18. The data encryption and transmission apparatus according to claim 17, wherein the processing module is specifically configured to encrypt the at least M-N+1 second data packets in the M second data packets, and add, to a header of each of the second data packets, indication information indicating whether the second data packet is encrypted, to obtain the M encrypted second data packets.

19. The data encryption and transmission apparatus according to claim 17 or 18, wherein the sending module is further configured to send encryption notification information to the receive end before sending the M encrypted second data packets obtained by the processing module to the receive end, wherein the encryption notification information comprises indication information indicating that the original data is first encoded by using the fountain code and then encrypted.

20. The data encryption and transmission apparatus according to claim 19, wherein the sending module is specifically configured to send the decryption notification information to the receive end by using a radio resource control RRC configuration message.

21. The data encryption and transmission apparatus according to any one of claims 17 to 20, wherein if a size of to-be-transmitted data is less than a data packet size preset by the data encryption and transmission apparatus, the processing module is further configured to: before evenly partitioning the original data into the N first data packets, successively combine at least two pieces of to-be-transmitted data to generate combined to-be-transmitted data, wherein the combined to-be-transmitted data is greater than or equal to the data packet size preset by the data encryption and transmission apparatus; and if the combined to-be-transmitted data is greater than the data packet size preset by the data encryption and transmission apparatus, partition a last piece of to-be-transmitted data, so that remaining combined to-be-transmitted data is equal to the data packet size preset by the data encryption and transmission apparatus, and use the remaining combined to-be-transmitted data as the original data; or if the combined to-be-transmitted data is equal to the data packet size preset by the data encryption and transmission apparatus, use the combined to-be-transmitted data as the original data.

22. The data encryption and transmission apparatus according to any one of claims 17 to 20, wherein if a size of to-be-transmitted data is greater than a data packet size preset by the data encryption and transmission apparatus, the processing module is further configured to obtain the original data from the to-be-transmitted data by means of partition before evenly partitioning the original data into the N first data packets, wherein a size of the original data is equal to the data packet size preset by the data encryption and transmission apparatus.

23. The data encryption and transmission apparatus according to any one of claims 17 to 22, wherein the original data is Packet Data Convergence Protocol PDCP layer data.

24. A data encryption and transmission apparatus, comprising:

a receiving module, configured to receive N encrypted second data packets from a transmit end, wherein the encrypted second data packets are encoded by using fountain code, and N is a positive integer; and a processing module, configured to decrypt at least one encrypted second data packet in the N encrypted second data packets received by the receiving module, to obtain N second data packets; decode, by using fountain code, the N second data packets to obtain N first data packets; and combine the N first data packets into original data.

25. The data encryption and transmission apparatus according to claim 24, wherein the processing module is specifically configured to obtain, from a header of each of the encrypted second data packets, indication information indicating whether the second data packet is encrypted; and decrypt an encrypted second data packet whose indication information indicates that the second data packet is encrypted, to obtain the N second data packets.

26. The data encryption and transmission apparatus according to claim 24 or 25, wherein the receiving module is further configured to: before receiving the N encrypted second data packets from the transmit end, receive encryption notification information sent by the transmit end, wherein the encryption notification information comprises indication information indicating that the original data is first encoded by using the fountain code and then encrypted.

27. The data encryption and transmission apparatus according to claim 26, wherein the receiving module is specifically configured to receive the decryption notification information sent by the transmit end by using a radio resource control RRC configuration message.

28. The data encryption and transmission apparatus according to any one of claims 24 to 27, wherein if a size of to-be-transmitted data is less than a data packet size preset by the data encryption and transmission apparatus, the processing module is further configured to partition the original data into at least two pieces of to-be-transmitted data after combining the N first data packets into the original data.

29. The data encryption and transmission apparatus according to any one of claims 24 to 27, wherein if a size of to-be-transmitted data is greater than a data packet size preset by the data encryption and transmission apparatus, the processing module is further configured to combine the original data received at least twice into the to-be-transmitted data after combining the N first data packets into the original data.

30. The data encryption and transmission apparatus according to any one of claims 24 to 29, wherein the original data is Packet Data Convergence Protocol PDCP layer data.

31. A data encryption and transmission method, comprising:

evenly partitioning original data into N first data packets, wherein N is a positive integer;
encrypting at least one first data packet in the N first data packets to obtain N encrypted first data packets;
encoding, by using fountain code, the N encrypted first data packets to obtain M second data packets, wherein M is a positive integer, and M>N; and
sending the M second data packets to a receive end.

32. The method according to claim 31, wherein the encrypting at least one first data packet in the N first data packets to obtain N encrypted first data packets comprises:

encrypting the at least one first data packet in the N first data packets, and adding, to a header of each of the first data packets, indication information indicating whether the first data packet is encrypted, to obtain the N encrypted first data packets.

33. The method according to claim 31 or 32, before the sending the M second data packets to a receive end, further comprising:

sending encryption notification information to the receive end, wherein the encryption notification information comprises indication information indicating that the original data is first encrypted and then encoded by using the fountain code.

**34.** The method according to claim 31, before the sending the M second data packets to a receive end, further comprising:

sending encryption notification information to the receive end, wherein the encryption notification information comprises indication information indicating that the original data is first encrypted and then encoded by using the fountain code, and indication information indicating whether each of the first data packets is encrypted.

**35.** The method according to claim 33 or 34, wherein the sending encryption notification information to the receive end comprises:

sending the decryption notification information to the receive end by using a radio resource control RRC configuration message.

**36.** The method according to any one of claims 31 to 35, wherein if a size of to-be-transmitted data is less than a data packet size preset in the data encryption and transmission method, before the evenly partitioning original data into N first data packets, the method further comprises:

successively combining at least two pieces of to-be-transmitted data to generate combined to-be-transmitted data, wherein the combined to-be-transmitted data is greater than or equal to the data packet size preset in the data encryption and transmission method; and

if the combined to-be-transmitted data is greater than the data packet size preset in the data encryption and transmission method, partitioning a last piece of to-be-transmitted data, so that remaining combined to-be-transmitted data is equal to the data packet size preset in the data encryption and transmission method, and using the remaining combined to-be-transmitted data as the original data; or if the combined to-be-transmitted data is equal to the data packet size preset in the data encryption and transmission method, using the combined to-be-transmitted data as the original data.

**37.** The method according to any one of claims 31 to 35, wherein if a size of to-be-transmitted data is greater than a data packet size preset in the data encryption and transmission method, before the evenly partitioning original data into N first data packets, the method further comprises:

obtaining the original data from the to-be-transmitted data by means of partition, wherein a size of the original data is equal to the data packet size preset in the data encryption and transmission method.

**38.** The method according to any one of claims 31 to 37, wherein the original data is Packet Data Convergence Protocol PDCP layer data.

**39.** A data encryption and transmission method, comprising:

receiving N second data packets from a transmit end, wherein the second data packets are encoded by using fountain code, and N is a positive integer;
decoding, by using fountain code, the N second data packets to obtain N first data packets;
decrypting at least one first data packet in the N first data packets to obtain N decrypted first data packets; and
combining the N decrypted first data packets into original data.

**40.** The method according to claim 39, wherein the decrypting at least one first data packet in the N first data packets to obtain N decrypted first data packets comprises:

obtaining, from a header of each of the first data packets, indication information indicating whether the first data packet is encrypted; and
decrypting a first data packet whose indication information indicates that the first data packet is encrypted, to obtain the N decrypted first data packets.

**41.** The method according to claim 39 or 40, before the receiving N second data packets from a transmit end, further comprising:

receiving encryption notification information sent by the transmit end, wherein the encryption notification information comprises indication information indicating that the original data is first encrypted and then encoded by using the fountain code.

**42.** The method according to claim 41, before the receiving N second data packets from a transmit end, further comprising:

receiving encryption notification information sent by the transmit end, wherein the encryption notification information comprises indication information indicating that the original data is first encrypted and then encoded by using the fountain code, and indication information indicating whether each of the first data packets is encrypted; and

the decrypting at least one first data packet in the N first data packets to obtain N decrypted first data packets comprises:

decrypting, according to the indication information indicating whether each of the first data packets is encrypted, the at least one first data packet in the N first data packets to obtain the N decrypted first data packets.

**43.** The method according to claim 41 or 42, wherein the receiving encryption notification information sent by the transmit end comprises:

receiving the decryption notification information sent by the transmit end by using a radio resource control RRC configuration message.

**44.** The method according to any one of claims 39 to 43, wherein if a size of to-be-transmitted data is less than a data packet size preset in the data encryption and transmission method, after the combining the N decrypted first data packets into original data, the method further comprises:

partitioning the original data into at least two pieces of to-be-transmitted data.

**45.** The method according to any one of claims 39 to 43, wherein if a size of to-be-transmitted data is greater than a data packet size preset in the data encryption and transmission method, after the combining the N decrypted first data packets into original data, the method further comprises:

combining the original data received at least twice into the to-be-transmitted data.

**46.** The method according to any one of claims 39 to 45, wherein the original data is Packet Data Convergence Protocol PDCP layer data.

**47.** A data encryption and transmission method, comprising:

evenly partitioning original data into N first data packets, wherein N is a positive integer;
encoding, by using fountain code, the N first data packets to obtain M second data packets, wherein M is a positive integer, and M>N;
encrypting at least M-N+1 second data packets in the M second data packets to obtain M encrypted second data packets; and
sending the M encrypted second data packets to a receive end.

**48.** The method according to claim 47, wherein the encrypting at least M-N+1 second data packets in the M second data packets to obtain M encrypted second data packets comprises:

encrypting the at least M-N+1 second data packets in the M second data packets, and adding, to a header of each of the second data packets, indication information indicating whether the second data packet is encrypted, to obtain the M encrypted second data packets.

**49.** The method according to claim 47 or 48, before the sending the M encrypted second data packets to a receive end, further comprising:

sending encryption notification information to the receive end, wherein the encryption notification information comprises indication information indicating that the original data is first encoded by using the fountain code and then encrypted.

**50.** The method according to claim 49, wherein the sending encryption notification information to the receive end comprises:

sending the decryption notification information to the receive end by using a radio resource control RRC configuration message.

51. The method according to any one of claims 47 to 50, wherein if a size of to-be-transmitted data is less than a data packet size preset in the data encryption and transmission method, before the evenly partitioning original data into N first data packets, the method further comprises:

successively combining at least two pieces of to-be-transmitted data to generate combined to-be-transmitted data, wherein the combined to-be-transmitted data is greater than or equal to the data packet size preset in the data encryption and transmission method; and

if the combined to-be-transmitted data is greater than the data packet size preset in the data encryption and transmission method, partitioning a last piece of to-be-transmitted data, so that remaining combined to-be-transmitted data is equal to the data packet size preset in the data encryption and transmission method, and using the remaining combined to-be-transmitted data as the original data; or if the combined to-be-transmitted data is equal to the data packet size preset in the data encryption and transmission method, using the combined to-be-transmitted data as the original data.

52. The method according to any one of claims 47 to 50, wherein if a size of to-be-transmitted data is greater than a data packet size preset in the data encryption and transmission method, before the evenly partitioning original data into N first data packets, the method further comprises:

obtaining the original data from the to-be-transmitted data by means of partition, wherein a size of the original data is equal to the data packet size preset in the data encryption and transmission method.

53. The method according to any one of claims 47 to 52, wherein the original data is Packet Data Convergence Protocol PDCP layer data.

54. A data encryption and transmission method, comprising:

receiving N encrypted second data packets from a transmit end, wherein the encrypted second data packets are encoded by using fountain code, and N is a positive integer;

decrypting at least one encrypted second data packet in the N encrypted second data packets to obtain N second data packets;

decoding, by using fountain code, the N second data packets to obtain N first data packets; and combining the N first data packets into original data.

55. The method according to claim 54, wherein the decrypting at least one second data packet in the N encrypted second data packets to obtain N second data packets comprises:

obtaining, from a header of each of the encrypted second data packets, indication information indicating whether the second data packet is encrypted; and

decrypting an encrypted second data packet whose indication information indicates that the second data packet is encrypted, to obtain the N second data packets.

56. The method according to claim 54 or 55, before the receiving N encrypted second data packets from a transmit end, further comprising:

receiving encryption notification information sent by the transmit end, wherein the encryption notification information comprises indication information indicating that the original data is first encoded by using the fountain code and then encrypted.

57. The method according to claim 56, wherein the receiving encryption notification information sent by the transmit end comprises:

receiving the decryption notification information sent by the transmit end by using a radio resource control RRC configuration message.

58. The method according to any one of claims 54 to 57, wherein if a size of to-be-transmitted data is less than a data packet size preset in the data encryption and transmission method, after the combining the N first data packets into original data, the method further comprises:

partitioning the original data into at least two pieces of to-be-transmitted data.

59. The method according to any one of claims 54 to 57, wherein if a size of to-be-transmitted data is greater than a data packet size preset in the data encryption and transmission method, after the combining the N first data packets into original data, the method further comprises:

combining the original data received at least twice into the to-be-transmitted data.

60. The method according to any one of claims 54 to 59, wherein the original data is Packet Data Convergence Protocol PDCP layer data.

| Processing module | 11 | Sending module | 12 |

FIG. 1

| Receiving module | 21 | Processing module | 22 |

FIG. 2

| Processing module | 31 | Sending module | 32 |

FIG. 3

| Receiving module | 41 | Processing module | 42 |

FIG. 4

Evenly partition original data into N first data packets, where N is a positive integer — S501

Encrypt at least one first data packet in the N first data packets to obtain N encrypted first data packets — S502

Encode, by using fountain code, the N encrypted first data packets to obtain M second data packets, where M is a positive integer, and M>N — S503

Send the M second data packets to a receive end — S504

FIG. 5

Receive N second data packets from a transmit end, where the second data packets are encoded by using fountain code, and N is a positive integer — S601

Decode, by using fountain code, the N second data packets to obtain N first data packets — S602

Decrypt at least one first data packet in the N first data packets to obtain N decrypted first data packets — S603

Combine the N decrypted first data packets into original data — S604

FIG. 6

Evenly partition original data into N first data packets, where N is a positive integer — S701

Encode, by using fountain code, the N first data packets to obtain M second data packets, where M is a positive integer, and M>N — S702

Encrypt at least M–N+1 second data packets in the M second data packets to obtain M encrypted second data packets — S703

Send the M encrypted second data packets to a receive end — S704

FIG. 7

Receive N encrypted second data packets from a transmit end, where the encrypted second data packets are encoded by using fountain code, and N is a positive integer — S801

Decrypt at least one encrypted second data packet in the N encrypted second data packets to obtain N second data packets — S802

Decode, by using fountain code, the N second data packets to obtain N first data packets — S803

Combine the N first data packets into original data — S804

FIG. 8

<div align="center">

## INTERNATIONAL SEARCH REPORT

</div>

| International application No. |
| --- |
| **PCT/CN2014/083222** |

| A. | CLASSIFICATION OF SUBJECT MATTER |
| --- | --- |

<div align="center">H04L 1/00 (2006.01) i</div>

According to International Patent Classification (IPC) or to both national classification and IPC

| B. | FIELDS SEARCHED |
| --- | --- |

Minimum documentation searched (classification system followed by classification symbols)

<div align="center">H04L; H04W; H03M</div>

Documentation searched other than minimum documentation to the extent that such documents are included in the fields searched

Electronic data base consulted during the international search (name of data base and, where practicable, search terms used)

WPI, EPODOC, CNPAT, CNKI: decrypt, more than, less than, fountain, LT, raptor, code, decode, encrypt, transmit, send, receive, data, information, divide, combine

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 103338092 A (TSINGHUA UNIVERSITY), 02 October 2013 (02.10.2013), claims 1-10, and description, paragraphs 22-23 | 1-5, 7-20, 22-35, 37-50, 52-60 |
| Y | PENG, Zhen et al. "Fountain Code-Based Method for Protecting Privacy and Recovering Data", JOURNAL OF HUAZHONG UNIVERSITY OF SCIENCE AND TECHNOLOGY (NATURE SCIENCE EDITION), vol. 40, supplement no. I, 31 December 2012 (31.12.2012), page 55, column 1 | 1-5, 7-20, 22-35, 37-50, 52-60 |
| Y | CN 103634076 A (SHANGHAI ELECTRICAL APPARATUS RESEARCH INSTITUTE et al.), 12 March 2014 (12.03.2014), claims 1-2 | 7, 22, 37, 52 |
| A | US 2009103723 A1 (SUN MICROSYSTEMS, INC.), 23 April 2009 (23.04.2009), the whole document | 1-60 |
| A | CN 101562498 A (CHINA MOBILE COMMUNICATIONS CORPORATION), 21 October 2009 (21.10.2009), the whole document | 1-60 |

| ☒ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 13 March 2015 (13.03.2015) | **30 March 2015 (30.03.2015)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **SHEN, Minjie** Telephone No.: (86-10) **62413417** |
| --- | --- |

Form PCT/ISA/210 (second sheet) (July 2009)

## INTERNATIONAL SEARCH REPORT

International application No.

**PCT/CN2014/083222**

**C (Continuation).** DOCUMENTS CONSIDERED TO BE RELEVANT

| Category* | Citation of document, with indication, where appropriate, of the relevant passages | Relevant to claim No. |
|---|---|---|
| A | CN 102325025 A (BEIJING SUMAVISION TECHNOLOGIES CO., LTD.), 18 January 2012 (18.01.2012), the whole document | 1-60 |
| A | CN 102164026 A (HARBIN INSTITUTE OF TECHNOLOGY SHENZHEN GRADUATE SCHOOL), 24 August 2011 (24.08.2011), the whole document | 1-60 |
| A | US 2008317243 A1 (NTT DOCOMO, INC.), 25 December 2008 (25.12.2008), the whole document | 1-60 |

Form PCT/ISA/210 (continuation of second sheet) (July 2009)

## INTERNATIONAL SEARCH REPORT
Information on patent family members

International application No.

**PCT/CN2014/083222**

| Patent Documents referred in the Report | Publication Date | Patent Family | Publication Date |
|---|---|---|---|
| CN 103338092 A | 02 October 2013 | None | |
| US 2009103723 A1 | 23 April 2009 | EP 2212823 A2 | 04 August 2010 |
| | | WO 2009052021 A2 | 23 April 2009 |
| CN 103634076 A | 12 March 2014 | None | |
| CN 101562498 A | 21 October 2009 | None | |
| CN 102325025 A | 18 January 2012 | None | |
| CN 102164026 A | 24 August 2011 | None | |
| US 2008317243 A1 | 25 December 2008 | JP 2010524014 A | 15 July 2010 |
| | | WO 2008156514 A2 | 24 December 2008 |

Form PCT/ISA/210 (patent family annex) (July 2009)